# EUROPEAN PATENT SPECIFICATION

(11) **EP 3 689 574 B1**
(45) Date of publication and mention of the grant of the patent: **17.02.2021**
(21) Application number: 19163124.1
(22) Date of filing: 15.03.2019
(51) Int. Cl.: B29C 45/16, B29C 45/44

(54) **METHOD OF MOLDING A PRODUCT INCLUDING AT LEAST ONE TURNING PART INCLUDING AT LEAST ONE OF AN UNDERCUT PART AND A RIGHT-ANGLE PART, PRODUCT MANUFACTURED BY THE METHOD, AND MOLDING DEVICE MANUFACTURING THE PRODUCT BY THE METHOD**
VERFAHREN ZUM FORMEN EINES PRODUKTES MIT MINDESTENS EINEM DREHTEIL MIT MINDESTENS EINEM HINTERSCHNITTENEN TEIL UND EINEM RECHTWINKLIGEN TEIL, NACH DEM VERFAHREN HERGESTELLTES PRODUKT UND FORMVORRICHTUNG ZUR FERTIGUNG DES PRODUKTES NACH DEM VERFAHREN
PROCÉDÉ DE MOULAGE D'UN PRODUIT COMPRENANT AU MOINS UNE PARTIE TOURNANTE COMPORTANT AU MOINS UNE PARTIE ENTRE UNE PARTIE EN CONTRE-DÉPOUILLE ET UNE PARTIE À ANGLE DROIT, PRODUIT FABRIQUÉ À L'AIDE DU PROCÉDÉ ET DISPOSITIF DE MOULAGE FABRICANT LE PRODUIT À L'AIDE DU PROCÉDÉ

(30) Priority: 31.01.2019 US 201916264467
(43) Date of publication of application: 05.08.2020
(73) Proprietor: XRSpace CO., LTD., Taoyuan City 330 (TW)
(72) Inventor: Huang, Tang-Yi, 414 Taichung City (TW); Su, Chia-Ching, 248 New Taipei City (TW); Huang, Chia-Hung, 333 Taoyuan City (TW)
(74) Representative: Straus, Alexander

(56) References cited:
- US-B1- 6 491 513

## Description

### Field of the Invention

The present invention relates to a method of molding a product including at least one turning part including at least one of an undercut part and a right-angle part, a product manufactured by the method, and a molding device manufacturing the product by the method according to the pre-characterizing clauses of claims 1, 8 and 15.

### Background of the Invention

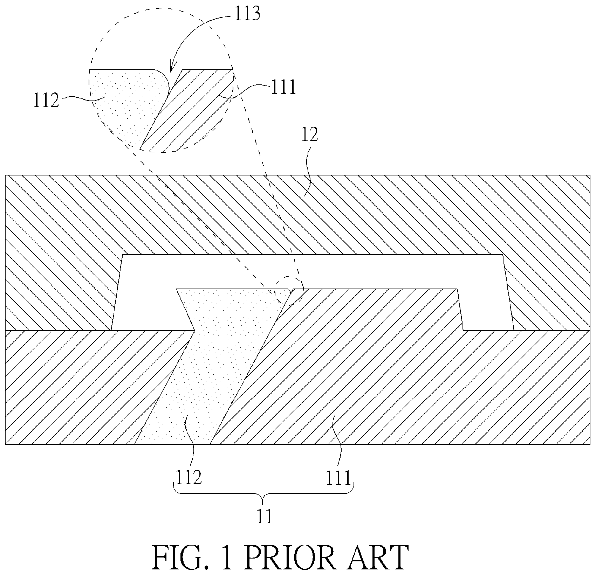

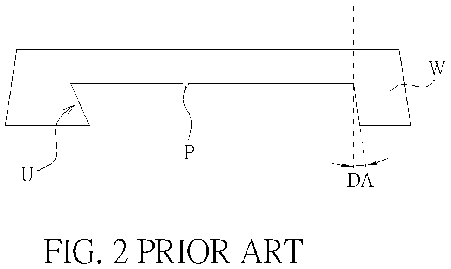

Molding is the most commonly used manufacturing process for the fabrication of plastic, glass or metal product. When it is desired to produce a product with an undercut part, it usually requires a sliding lifter attached to a core to form the undercut part and travel sideways with an ejection movement to release the product (see US 6 491 513 B1). For example, please refer to FIG. 1 and FIG. 2. FIG. 1 is a diagram of a mold assembly during a molding process in the prior art. FIG. 2 is a diagram of a product molded by the molding assembly shown in FIG. 1 in the prior art. As shown in FIG. 1 and FIG. 2, in order to mold the product with an undercut part U at a left side, the molding assembly includes a male mold 11 and a female mold 12, and the male mold 11 includes a core 111 and a sliding lifter 112. However, a molding surface of a boundary between the sliding lifter 112 and the core 111 cannot be a smooth surface due to a gap 113 between the sliding lifter 112 and the core 111. Therefore, the gap may be filled with the melted plastic, glass or metal to form a protruding structure on the product during the molding process. The protruding structure can be regarded as a molding defect which causes a negative influence on aesthetic appearance of the product. Especially when the product is made of transparent material, the protruding structure can be observed easily from outside.

Furthermore, as shown in FIG. 1 and FIG. 2, the product includes a slanted wall W with an inner draft angle DA at a right side, so as to facilitate removal of the product from the male mold 11. A product having a vertical wall without a draft angle may offer significant resistance due to friction during the removal. Currently, a sliding lifter and a core also can be provided as a solution for releasing a product with a right-angle part, such as a vertical wall without a draft angle. However, as mentioned above, a protruding structure may be formed due to a gap between the sliding lifter and the core, which causes a negative influence on aesthetic appearance of the product.

There is a need to improve aesthetic appearance of a molding product with an undercut part or a right-angle part.

### Summary of the Invention

This is mind, the present invention aims at providing a method of molding a product including at least one turning part including at least one of an undercut part and a right-angle part, a product manufactured by the method, and a molding device manufacturing the product by the method for solving a problem of a protrusion structure caused by a gap between a lifter and a core in the prior art during a molding process, which improves aesthetic appearance of the product.

This is achieved by a method of molding a product including at least one turning part including at least one of an undercut part and a right-angle part, a product manufactured by the method, and a molding device manufacturing the product by the method according to claims 1, 8 and 15. The dependent claims pertain to corresponding further developments and improvements.

As will be seen more clearly from the detail description following below, the claimed method of molding a product including at least one turning part includes providing a female mold, a first male mold including a first core and at least one first lifter obliquely and slidably disposed on the first core, and a temporary mold disposed between the female mold and the first male mold, wherein the temporary mold covers at least one first boundary between the first core and the at least one first lifter of the first male mold in a contacting manner, at least one first molding chamber is defined by the female mold, the first male mold and the temporary mold, and the at least one first boundary is located outside the at least one first molding chamber; performing a first injection into the at least one first molding chamber to mold a first portion of the product including at least one of the at least one turning part; removing the temporary mold; replacing the first male mold with a second male mold including a second core and at least one second lifter obliquely and slidably disposed on the second core, wherein the first portion of the product covers at least one second boundary between the second core and the at least one second lifter of the second male mold in a contacting manner, a second molding chamber is defined by the female mold, the second male mold and the first portion of the product, and the at least one second boundary is located outside the second molding chamber; and performing a second injection into the second molding chamber to mold a second portion of the product integrally formed with the first portion of the product, so as to mold the completed product.

According to an embodiment of the present disclosure, the temporary mold is connected to the first male mold, and removing the temporary mold includes removing the temporary mold by replacing the first male mold with the second male mold.

According to an embodiment of the present disclosure, the temporary mold is connected to the female mold, and removing the temporary mold includes removing the temporary mold by replacing the female mold with another female mold.

According to an embodiment of the present disclosure, performing the first injection into the at least one first molding chamber to mold the first portion of the product including the at least one of the at least one turning part includes performing the first injection into the at least one first molding chamber with a transparent material to mold the first portion of the product including the at least one of the at least one turning part.

According to an embodiment of the present disclosure, performing the second injection into the second molding chamber to mold the second portion of the product integrally formed with the first portion of the product, so as to mold the completed product includes performing the second injection into the second molding chamber with a transparent material to mold the second portion of the product integrally formed with the first portion of the product, so as to mold the completed product.

According to an embodiment of the present disclosure, replacing the first male mold with the second male mold including the second core and the at least one second lifter obliquely and slidably disposed on the second core includes providing the second male mold rotated from the first male mold by 180 degrees.

According to an embodiment of the present disclosure, the at least one turning part includes a plurality of turning parts, and performing the first injection into the at least one first molding chamber to mold the first portion of the product including the at least one of the at least one turning part includes performing the first injection into the at least one first molding chamber to mold the first portion of the product including the plurality of turning parts at different times or at one time.

Furthermore, the present disclosure further discloses a product including at least one turning part including at least one of an undercut part and a right-angle part, and manufactured by the aforementioned method.

Besides, the present disclosure further discloses a molding device manufacturing a product including at least one turning part including at least one of an undercut part and a right-angle part by the aforementioned method.

In summary, the present disclosure utilizes the first injection to mold the first portion of the product including at least one turning part and further utilizes the second injection to mold the second portion of the product integrally formed with the first portion of the product. Furthermore, the first boundary between the first core and the first lifter of the first male mold is covered and located outside the first molding chamber during the first injection, and the second boundary between the second core and the second lifter of the second male mold is covered and located outside the second molding chamber during the second injection. Therefore, it effectively solves a problem of a protrusion structure caused by a gap between a lifter and a core in the prior art during a molding process, which improves aesthetic appearance of the product.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a diagram of a mold assembly during a molding process in the prior art,
FIG. 2 is a diagram of a product molded by the molding assembly shown in FIG. 1 in the prior art,
FIG. 3 is a flow chart diagram illustrating a method of molding a product including an undercut part and a slanted wall part with a molding device according to a first embodiment of the present disclosure,
FIG. 4 is a diagram of a first mold assembly before a first injection according to the first embodiment of the present disclosure,
FIG. 5 is a diagram of a second mold assembly before a second injection according to the first embodiment of the present disclosure,
FIG. 6 is a diagram of the product after the second injection according to the first embodiment of the present disclosure,
FIG. 7 is a flow chart diagram illustrating a method of molding a product including two undercut parts and a connecting part with a molding device according to a second embodiment of the present disclosure,
FIG. 8 is a diagram of a first mold assembly before a first injection according to the second embodiment of the present disclosure,
FIG. 9 is a diagram of a second mold assembly before a second injection according to the second embodiment of the present disclosure,
FIG. 10 is a diagram of the product after the second injection according to the second embodiment of the present disclosure,
FIG. 11 is a flow chart diagram illustrating a method of molding a product including two undercut parts and a connecting part with a molding device according to a third embodiment of the present disclosure,
FIG. 12 is a diagram of a first mold assembly before a first injection according to the third embodiment of the present disclosure,
FIG. 13 is a diagram of a second mold assembly before a second injection according to the third embodiment of the present disclosure,
FIG. 14 is a diagram of the product after the second injection according to the third embodiment of the present disclosure,
FIG. 15 is a flow chart diagram illustrating a method of molding a product including a right-angle part and a slanted wall part with a molding device according to a fourth embodiment of the present disclosure,
FIG. 16 is a diagram of a first mold assembly before a first injection according to the fourth embodiment of the present disclosure,
FIG. 17 is a diagram of a second mold assembly before a second injection according to the fourth embodiment of the present disclosure,
FIG. 18 is a diagram of the product after the second injection according to the fourth embodiment of the present disclosure,
FIG. 19 is a flow chart diagram illustrating a method of molding a product including two right-angle parts and a connecting part with a molding device according to a fifth embodiment of the present disclosure,
FIG. 20 is a diagram of a first mold assembly before a first injection according to the fifth embodiment of the present disclosure,
FIG. 21 is a diagram of a second mold assembly before a second injection according to the fifth embodiment of the present disclosure,
FIG. 22 is a diagram of the product after the second injection according to the fifth embodiment of the present disclosure,
FIG. 23 is a flow chart diagram illustrating a method of molding a product including an undercut part, a right-angle part and a connecting part with a molding device according to a sixth embodiment of the present disclosure,
FIG. 24 is a diagram of a first mold assembly before a first injection according to the sixth embodiment of the present disclosure,
FIG. 25 is a diagram of a second mold assembly before a second injection according to the sixth embodiment of the present disclosure, and
FIG. 26 is a diagram of the product after the second injection according to the sixth embodiment of the present disclosure.

### Detailed Description

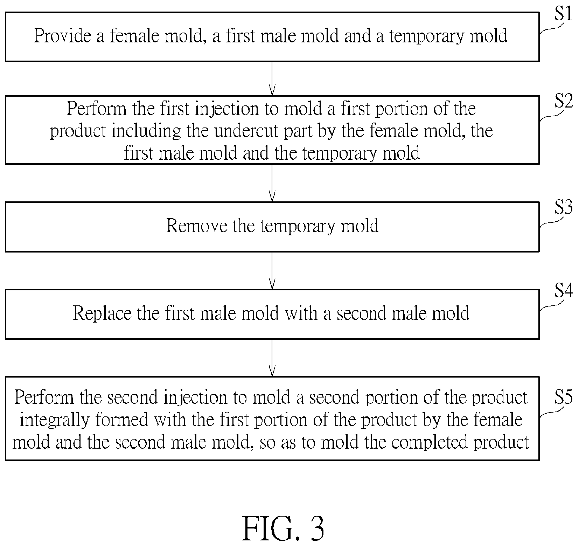

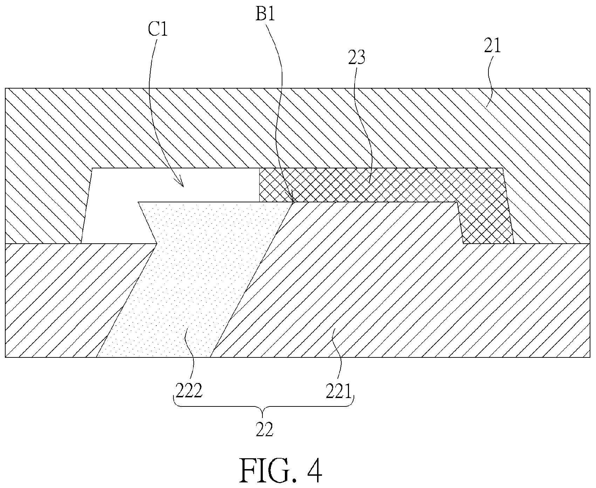

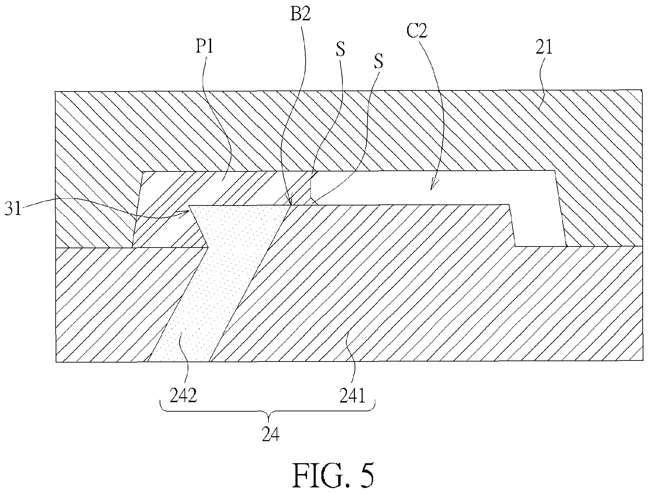

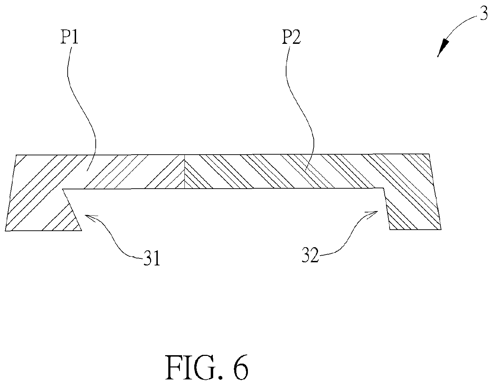

Please refer to FIG. 3 to FIG. 6. FIG. 3 is a flow chart diagram illustrating a method of molding a product 3 including an undercut part 31 and a slanted wall part 32 with a molding device according to a first embodiment of the present disclosure. FIG. 4 is a diagram of a first mold assembly before a first injection according to the first embodiment of the present disclosure. FIG. 5 is a diagram of a second mold assembly before a second injection according to the first embodiment of the present disclosure. FIG. 6 is a diagram of the product 3 after the second injection according to the first embodiment of the present disclosure. As shown in FIG. 3 to FIG. 6, the product 3 includes a turning part at a left side and the slanted wall part 32 at a right side. The slanted wall part 32 can be a right corner of the product 3 having an interior angle greater than 90 degrees. The turning part can be a left corner of the product 3 and include the undercut part 31 whose interior angle is less than 90 degrees, and the method of molding the product 3 with the molding device includes the following steps:
S1: Provide a female mold 21, a first male mold 22 and a temporary mold 23.
S2: Perform the first injection to mold a first portion P1 of the product 3 including the undercut part 31 by the female mold 21, the first male mold 22 and the temporary mold 23.
S3: Remove the temporary mold 23.
S4: Replace the first male mold 22 with a second male mold 24.
S5: Perform the second injection to mold a second portion P2 of the product 3 integrally formed with the first portion P1 of the product 3 by the female mold 21 and the second male mold 24, so as to mold the completed product 3.

Detailed description for the aforementioned steps is provided. The molding device can include the female mold 21, the first male mold 22, the temporary mold 23 and the second male mold 24. The method of molding the product 3 including the undercut part 31 and the slanted wall part 32 can involve a two-stage molding process, such as a double-shot molding process or an insert molding process. Before the first injection, the female mold 21, the first male mold 22 and the temporary mold 23 are provided as the first mold assembly, which is shown in FIG. 4, to form a first molding chamber C1 (step S1). As shown in FIG. 4, the first male mold 22 includes a first core 221 and a first lifter 222 obliquely and slidably disposed on the first core 221. The temporary mold 23 is disposed between the female mold 21 and the first male mold 22 and covers a first boundary B1 between the first core 221 and the first lifter 222 of the first male mold 22 in a contacting manner. In other words, the first molding chamber C1 is defined by the female mold 21, the first male mold 22 and the temporary mold 23, and the first boundary B1 is located outside the first molding chamber C1. Therefore, during the first injection, the first molding chamber C1 is filled with a first material to mold the first portion P1 of the product 3 including the undercut part 31 (step S2).

Afterwards, the first lifter 222 is operated to travel sideways to release the female mold 21 and the first male mold 22. Furthermore, the temporary mold 23 is removed, and the first male mold 22 is replaced by the second male mold 24 (steps S3 and S4), so that the female mold 21, the second male mold 24 and the first portion P1 of the product 3 are provided as the second mold assembly, which is shown in FIG. 5, to form a second molding chamber C2. In this embodiment, the temporary mold 23 can be preferably connected to the first male mold 22. Therefore, the temporary mold 23 can be removed together by replacing the first male mold 22 with the second male mold 24. However, it is not limited to this embodiment. For example, in another embodiment, the temporary mold also can be connected to the female mold, so as to be removed by replacing the female mold with another female mold. Alternatively, in another embodiment, the temporary mold can be an independent mold separated from the first male mold and the female mold, so as to be removed independently.

Furthermore, as shown in FIG. 5, the second male mold 24 includes a second core 241 and a second lifter 242 obliquely and slidably disposed on the second core 241. The second lifter 242 has a thinner thickness than a thickness of the first lifter 241. The first portion P1 of the product 3 is located between the female mold 21 and the second male mold 24, and a second boundary B2 between the second core 241 and the second lifter 242 of the second male mold 24 is covered by the first portion P1 of the product 3 in a contacting manner. In other words, the second molding chamber C2 is defined by the female mold 21, the second male mold 24 and the first portion P1 of the product 3 and adjacent to the first molding chamber C1, and the second boundary B2 is located outside the second molding chamber C2. Therefore, during the second injection, the second molding chamber C2 is filled with a second material to mold the second portion P2 of the product 3 including the slanted wall part 32 and integrally formed with the first portion P1 of the product 3 (step S5), so as to mold the completed product 3 including the undercut part 31 and the slanted wall part 32, which is shown in FIG. 6. Besides, the first material and the second material can be the same material and a transparent material.

From the above, the first boundary B1 between the first lifter 222 and the first core 221 is located outside the first molding chamber C1 during the first injection of molding the first portion P1 of the product 3 including the undercut part 31, and the second boundary B2 between the second lifter 242 and the second core 241 is located outside the second molding chamber C2 during the second injection of molding the second portion P2 of the product 3 including the slanted wall part 32. All surfaces of the first portion P1 of the product 3 can be smooth without interference of the first boundary B1 between the first lifter 222 and the first core 221 even if there is a gap, which is small and not shown in figures, formed on the first boundary B1 between the first lifter 222 and the first core 221, and all surfaces of the second portion P2 of the product 3 can be smooth without interference of the second boundary B2 between the second core 241 and the second lifter 242 even if there is a gap, which is small and not shown in figures, formed on the second boundary B2 between the second core 241 and the second lifter 242. Therefore, it effectively solves a problem of a protrusion structure caused by a gap between a lifter and a core in the prior art during a molding process, which improves aesthetic appearance of the product 3 especially when the product 3 is made of transparent material, i.e., both of the first material and the second material are transparent. In conclusion, there is no protrusion structure formed on the product 3, which can be observed through the transparent material, during the molding process of the present disclosure.

Besides, it should be noticed that, as shown in FIG. 4 to FIG. 6, after the first injection, the first portion P1 of the product 3 may include two protrusions S on a left side due to a gap between the temporary mold 23 and the female mold 21 and a gap between the temporary mold 23 and the first slider 222, which are small and not shown in figures. However, the two protrusions S can be melted and integrally formed with the second portion P2 of the product 3 during the second injection. It cannot affect aesthetic appearance of the product 3.

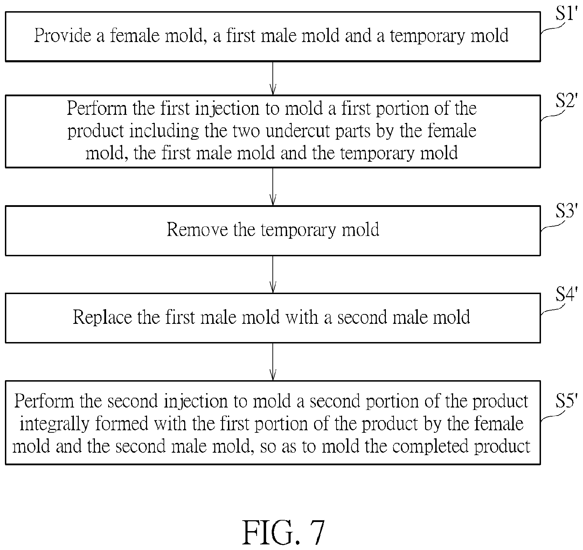

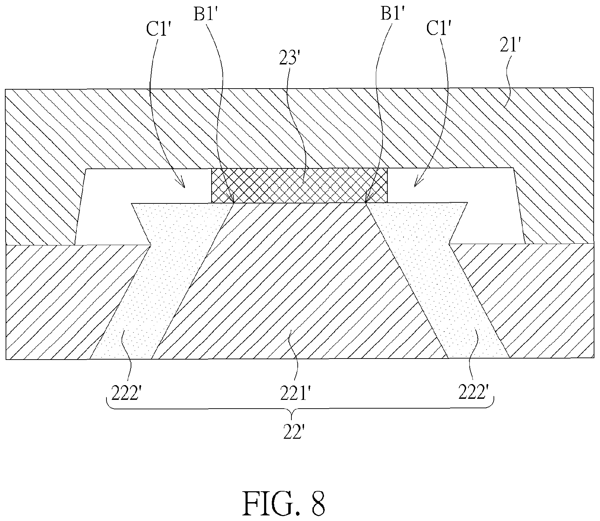

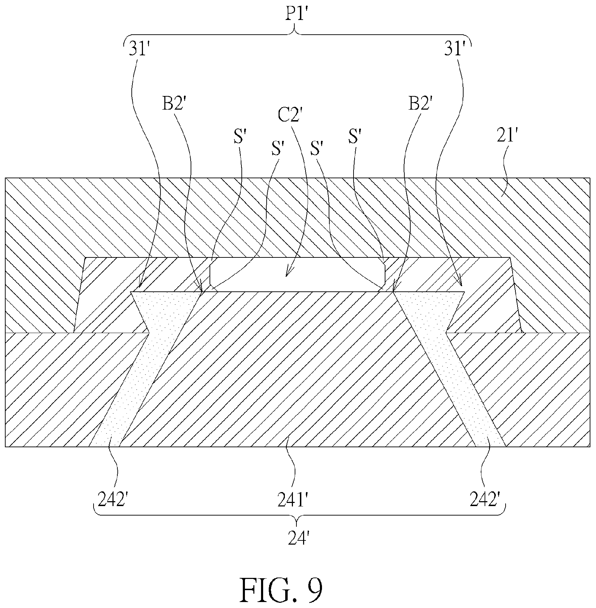

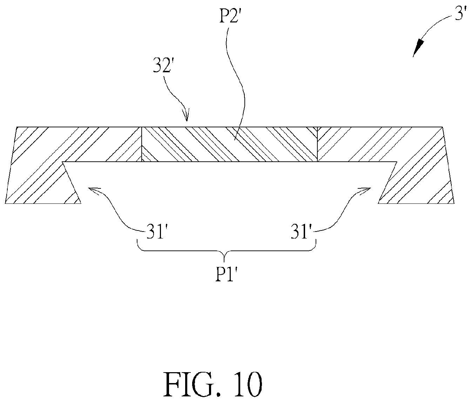

Please refer to FIG. 7 to FIG. 10. FIG. 7 is a flow chart diagram illustrating a method of molding a product 3' including two undercut parts 31' and a connecting part 32' with a molding device according to a second embodiment of the present disclosure. FIG. 8 is a diagram of a first mold assembly before a first injection according to the second embodiment of the present disclosure. FIG. 9 is a diagram of a second mold assembly before a second injection according to the second embodiment of the present disclosure. FIG. 10 is a diagram of the product 3' after the second injection according to the second embodiment of the present disclosure. As shown in FIG. 7 to FIG. 10, different from the first embodiment, the product 3' of this embodiment includes two turning parts at a left side and a right side and the connecting part 32'. The two turning parts can be a left corner and a right corner of the product 3, and each turning part can include the undercut part 31' whose interior angle is less than 90 degrees. The connecting part 32' is connected to the two undercut parts 31', and the method of molding the product 3' with the molding device includes the following steps:
S1': Provide a female mold 21', a first male mold 22' and a temporary mold 23'.
S2': Perform the first injection to mold a first portion P1' of the product 3' including the two undercut parts 31' by the female mold 21', the first male mold 22' and the temporary mold 23'.
S3': Remove the temporary mold 23'.
S4': Replace the first male mold 22' with a second male mold 24'.
S5': Perform the second injection to mold a second portion P2' of the product 3' integrally formed with the first portion P1' of the product 3' by the female mold 21' and the second male mold 24', so as to mold the completed product 3'.

Detailed description for the aforementioned steps is provided. The molding device can include the female mold 21', the first male mold 22', the temporary mold 23' and the second male mold 24'. Before the first injection, the female mold 21', the first male mold 22' and the temporary mold 23' are provided as the first mold assembly, which is shown in FIG. 8, to form two first molding chambers C1' (step S1'). As shown in FIG. 8, the first male mold 22' includes a first core 221' and two first lifters 222' obliquely and slidably disposed on the first core 221'. The temporary mold 23' is disposed between the female mold 21' and the first male mold 22' and covers two first boundaries B1' between the first core 221' and the two first lifters 222' of the first male mold 22' in a contacting manner. In other words, the two first molding chambers C1' are defined by the female mold 21', the first male mold 22' and the temporary mold 23', and the two first boundaries B1' are located outside the two first molding chambers C1'. Therefore, during the first injection, the two first molding chambers C1' are filled with a first material to mold the first portion P1' of the product 3' including the two undercut parts 31' (step S2'). In this embodiment, the first portion P1' of the product 3' including the two undercut parts 31' can be molded by one-time injection. However, it is not limited to this embodiment. For example, in another embodiment, the first portion P1' of the product 3' including the two undercut parts 31' can be molded by multiple injections at different times. It depends on practical demands.

Afterwards, the temporary mold 23' is removed, and the first male mold 22' is replaced by the second male mold 24' (steps S3' and S4'), so that the female mold 21', the second male mold 24' and the first portion P1' of the product 3' are provided as the second mold assembly, which is shown in FIG. 9, to form a second molding chamber C2'. Similar to the first embodiment, the temporary mold 23' of this embodiment can be preferably connected to the first male mold 22'. Therefore, the temporary mold 23' can be removed together by replacing the first male mold 22' with the second male mold 24'. However, it is not limited to this embodiment. Furthermore, the second male mold 24' includes a second core 241' and two second lifters 242' obliquely and slidably disposed on the second core 241'. The first portion P1' of the product 3' is located between the female mold 21' and the second male mold 24', and two second boundaries B2' between the second core 241' and the two second lifters 242' of the second male mold 24' are covered by the first portion P1' of the product 3' in a contacting manner. In other words, the second molding chamber C2' is defined by the female mold 21', the second male mold 24' and the first portion P1' of the product 3', and the two second boundaries B2' are located outside the second molding chamber C2'. Therefore, during the second injection, the second molding chamber C2' is filled with a second material to mold the second portion P2' of the product 3' including the connecting part 32' and integrally formed with the first portion P1' of the product 3' (step S5'), so as to mold the completed product 3' including the two undercut parts 31' and the connecting part 32', which is shown in FIG. 10. All surfaces of the first portion P1' of the product 3' can be smooth without interference of the two first boundaries B1' between the first core 221' and the two first lifters 222', and all surfaces of the second portion P2 of the product 3' can be smooth without interference of the two second boundaries B2' between the second core 241' and the two second lifters 242'. Therefore, there is no protrusion structure formed on the product 3'.

Besides, similarly, as shown in FIG. 8 to FIG. 10, after the first injection, the first portion P1' of the product 3' may include protrusions S' due to gaps between the temporary mold 23' and the female mold 21' and gaps between the temporary mold 23' and the two first sliders 222', which are not shown in figures. However, the protrusions S' can be melted and integrally formed with the second portion P2' of the product 3' during the second injection. It cannot affect aesthetic appearance of the product 3'.

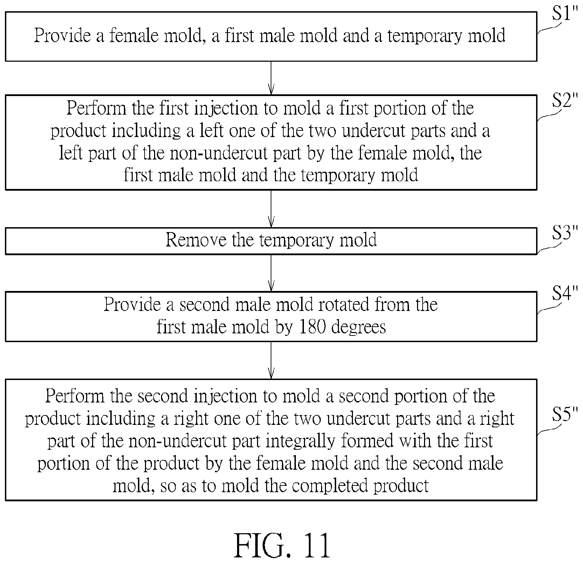

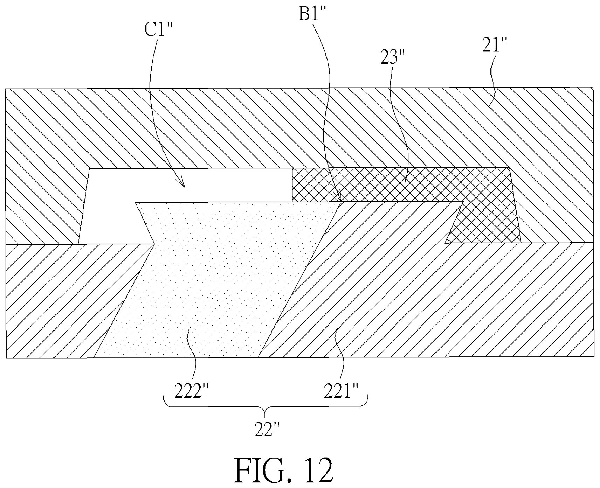

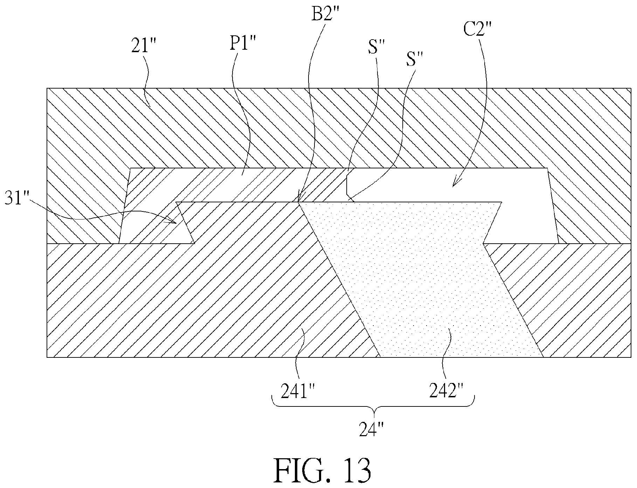

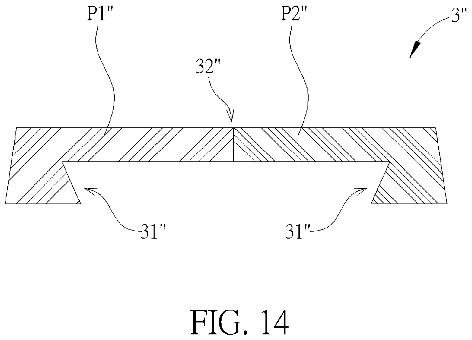

Please refer to FIG. 11 to FIG. 14. FIG. 11 is a flow chart diagram illustrating a method of molding a product 3" including two undercut parts 31" and a connecting part 32" with a molding device according to a third embodiment of the present disclosure. FIG. 12 is a diagram of a first mold assembly before a first injection according to the third embodiment of the present disclosure. FIG. 13 is a diagram of a second mold assembly before a second injection according to the third embodiment of the present disclosure. FIG. 14 is a diagram of the product 3" after the second injection according to the third embodiment of the present disclosure. As shown in FIG. 11 to FIG. 14, different from the aforementioned embodiments, the product 3" of this embodiment includes two turning parts at a left side and a right side and the connecting part 32". The two turning parts can be a left corner and a right corner of the product 3", and each turning part can include the undercut part 31" whose interior angle is less than 90 degrees. The connecting part 32" is connected to the two undercut parts 31", and the method of molding the product 3" with the molding device includes the following steps:
S1": Provide a female mold 21", a first male mold 22" and a temporary mold 23".
S2": Perform the first injection to mold a first portion P1" of the product 3" including a left one of the two undercut parts 31" and a left portion of the connecting part 32" by the female mold 21", the first male mold 22" and the temporary mold 23".
S3": Remove the temporary mold 23".
S4": Provide a second male mold 24" rotated from the first male mold 22" by 180 degrees.
S5": Perform the second injection to mold a second portion P2" of the product 3" including a right one of the two undercut parts 31" and a right portion of the connecting part 32" integrally formed with the first portion P1" of the product 3" by the female mold 21" and the second male mold 24", so as to mold the completed product 3".

Detailed description for the aforementioned steps is provided. The molding device can include the female mold 21", the first male mold 22", the temporary mold 23" and the second male mold 24". Before the first injection, the female mold 21", the first male mold 22" and the temporary mold 23" are provided as the first mold assembly, which is shown in FIG. 12, to form a first molding chamber C1" (step S1"). As shown in FIG. 12, the first male mold 22" includes a first core 221" and a first lifter 222" obliquely and slidably disposed on the first core 221". The temporary mold 23" is disposed between the female mold 21" and the first male mold 22" and covers a first boundary B1" between the first core 221" and the first lifter 222" of the first male mold 22" in a contacting manner. In other words, the first molding chamber C1" is defined by the female mold 21", the first male mold 22" and the temporary mold 23", and the first boundary B1" is located outside the first molding chamber C1". Therefore, during the first injection, the first molding chamber C1" is filled with a first material to mold the first portion P1" of the product 3" including the left one of the two undercut parts 31" and the left portion of the connecting part 32" (step S2").

Afterwards, the temporary mold 23" is removed, and the first male mold 22" is replaced by the second male mold 24", which is rotated from the first male mold 22" by 180 degrees, (steps S3" and S4"), so that the female mold 21", the second male mold 24" and the first portion P1" of the product 3" are provided as the second mold assembly, which is shown in FIG. 13, to form a second molding chamber C2". In this embodiment, the temporary mold 23" can preferably be an independent mold. Therefore, the temporary mold 23" can be removed independently. However, it is not limited to this embodiment. As shown in FIG. 13, the second male mold 24" includes a second core 241" and a second lifter 242" obliquely and slidably disposed on the second core 241". Since the second male mold 24" is rotated from the first male mold 22" by 180 degrees, the second core 241" and the second lifter 242" of the second male mold 24" are substantially opposite to the first core 221" and the first lifter 222" of the first male mold 22". The first portion P1" of the product 3" is located between the female mold 21" and the second male mold 24", and a second boundary B2" between the second core 241" and the second lifter 242" of the second male mold 24" is covered by the first portion P1" of the product 3" in a contacting manner. In other words, the second molding chamber C2" is defined by the female mold 21", the second male mold 24" and the first portion P1" of the product 3", and the second boundary B2" is located outside the second molding chamber C2". Therefore, during the second injection, the second molding chamber C2" is filled with a second material to mold the second portion P2" of the product 3" including the right one of the two undercut part 31" and the right portion of the connecting part 32" and integrally formed with the first portion P1" of the product 3" (step S5"), so as to mold the completed product 3" including the two undercut parts 31" and the connecting part 32", which is shown in FIG. 14. All surfaces of the first portion P1" of the product 3" can be smooth without interference of the first boundary B1" between the first core 221" and the first lifter 222", and all surfaces of the second portion P2" of the product 3" can be smooth without interference of the second boundary B2" between the second core 241" and the second lifter 242". Therefore, there is no protrusion structure formed on the product 3".

Besides, similarly, as shown in FIG. 11 to FIG. 14, after the first injection, the first portion P1" of the product 3" may include protrusions S" due to a gap between the temporary mold 23" and the female mold 21" and a gap between the temporary mold 23" and the first sliders 222", which are not shown in figures. However, the protrusions S" can be melted and integrally formed with the second portion P2" of the product 3" during the second injection. It cannot affect aesthetic appearance of the product 3".

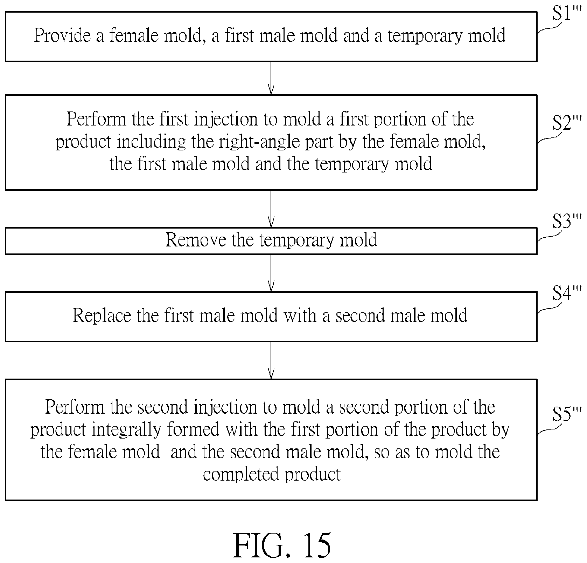

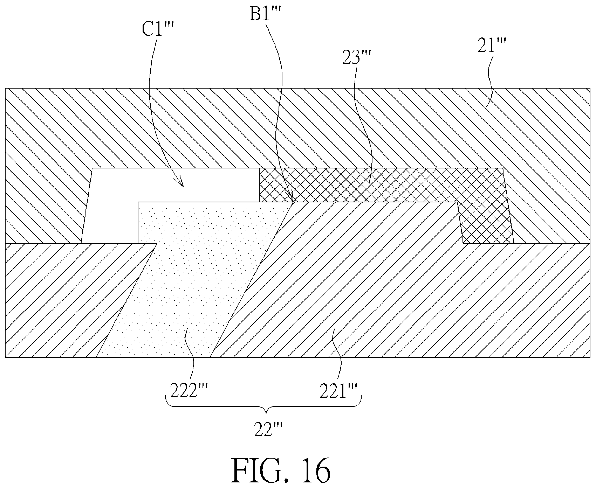

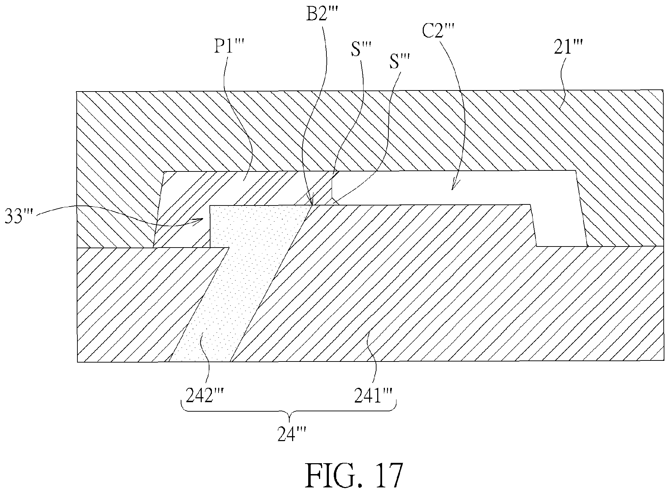

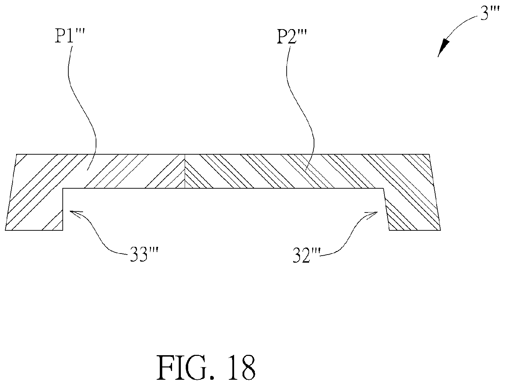

Please refer to FIG. 15 to FIG. 18. FIG. 15 is a flow chart diagram illustrating a method of molding a product 3''' including a right-angle part 33''' and an slanted wall part 32''' with a molding device according to a fourth embodiment of the present disclosure. FIG. 16 is a diagram of a first mold assembly before a first injection according to the fourth embodiment of the present disclosure. FIG. 17 is a diagram of a second mold assembly before a second injection according to the fourth embodiment of the present disclosure. FIG. 18 is a diagram of the product 3''' after the second injection according to the fourth embodiment of the present disclosure. As shown in FIG. 15 to FIG. 18, different from the aforementioned embodiments, the product 3''' of this embodiment includes a turning part at a left side and the slanted wall part 32". The slanted wall part 32" can be a right corner of the product 3''' having an interior angle greater than 90 degrees. The turning part can be a left corner of the product 3''' and include the right-angle part 33''' whose interior angle is equal to 90 degrees. The method of molding the product 3''' with the molding device of this embodiment can be similar to the one of the first embodiment. A first portion P1''' of the product 3''' including the right-angle part 33''' can be molded by performing a first injection into a first molding chamber C1''' shown in FIG. 16. A second portion P2''' of the product 3''' including the slanted wall part 32''' can be molded and integrally formed with the first portion P1''' by performing the second injection into a second molding chamber C2''' shown in FIG. 17, so as to mold the completed product 3'''. Detailed description is omitted herein for simplicity.

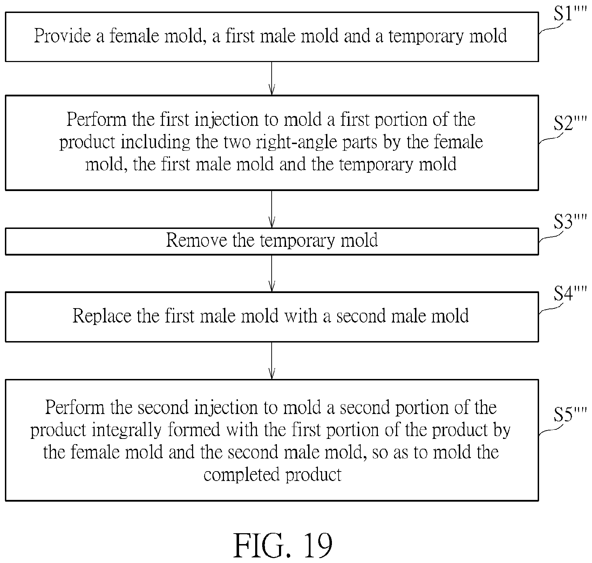

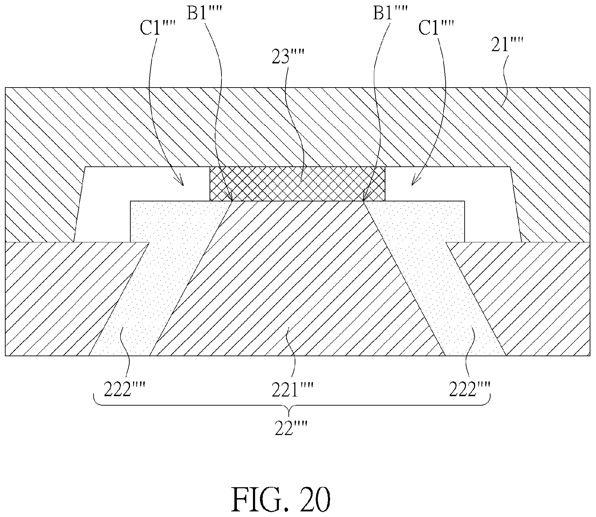

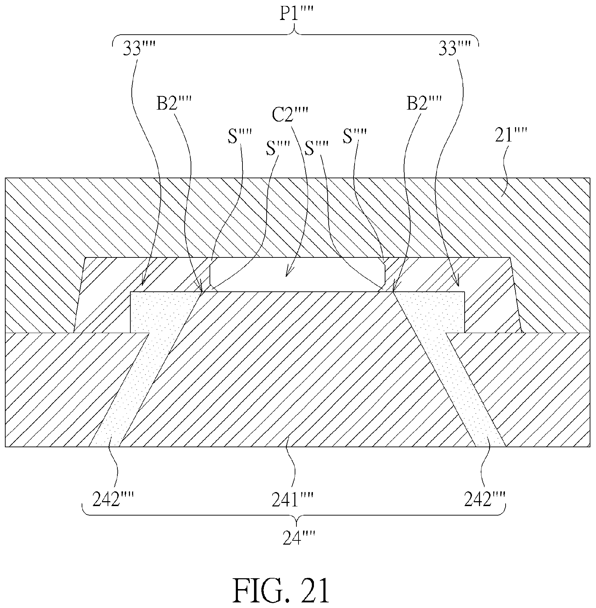

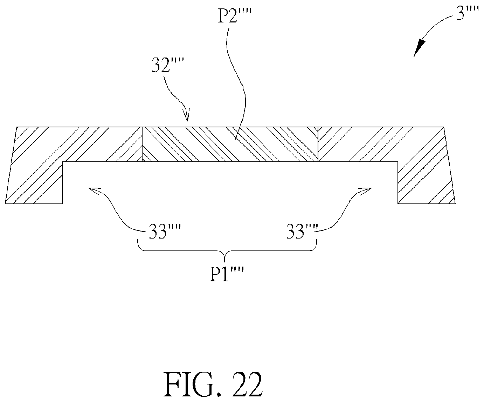

Please refer to FIG. 19 to FIG. 22. FIG. 19 is a flow chart diagram illustrating a method of molding a product 3'''' including two right-angle parts 33'''' and a connecting part 32'''' with a molding device according to a fifth embodiment of the present disclosure. FIG. 20 is a diagram of a first mold assembly before a first injection according to the fifth embodiment of the present disclosure. FIG. 21 is a diagram of a second mold assembly before a second injection according to the fifth embodiment of the present disclosure. FIG. 22 is a diagram of the product 3'''' after the second injection according to the fifth embodiment of the present disclosure. As shown in FIG. 19 to FIG. 22, different from the aforementioned embodiments, the product 3"" of this embodiment includes two turning parts at a left side and at a right side and the connecting part 32''''. The two turning parts can be a left corner and a right corner of the product 3'''', and each turning part can include the right-angle part 33'''' whose interior angle is equal to 90 degrees. The connecting part 32'''' is connected to the two right-angle parts 33''''. The method of molding the product 3'''' with the molding device of this embodiment can be similar to the one of the second embodiment. A first portion P1'''' of the product 3'''' including the two right-angle parts 33'''' can be molded by performing a first injection into two first molding chambers C1'''' shown in FIG. 19. A second portion P2'''' of the product 3'''' including the connecting part 32'''' can be molded and integrally formed with the first portion P1'''' by performing the second injection into a second molding chamber C2'''' shown in FIG. 20, so as to mold the completed product 3''''. Detailed description is omitted herein for simplicity. Furthermore, understandably, the undercut part 31'''' and the right-angle part 33'''' can be molded at different times or at one time. However, it is not limited to this embodiment. The product 3'''' of this embodiment also can be molded by providing a second male mold rotated from the first male mold by 180 degrees, which is similar to the method of the third embodiment. Detailed description is omitted herein for simplicity.

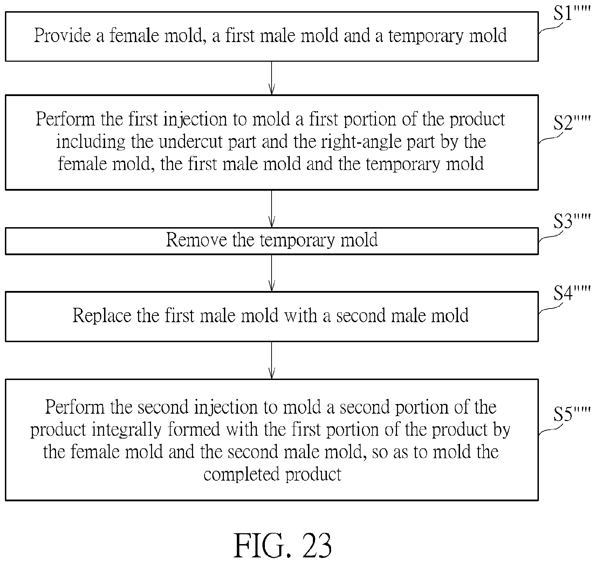

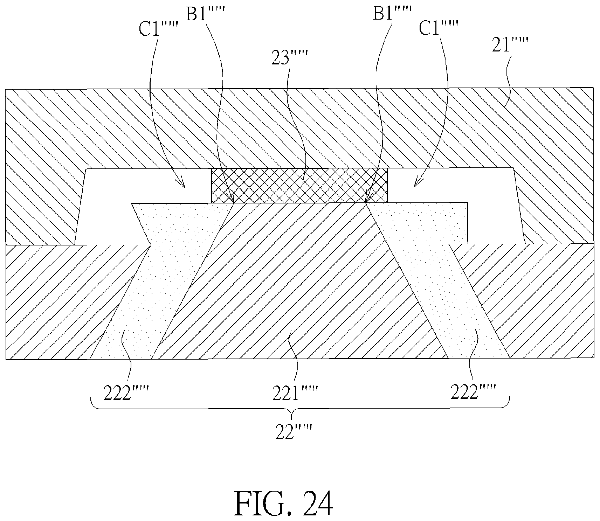

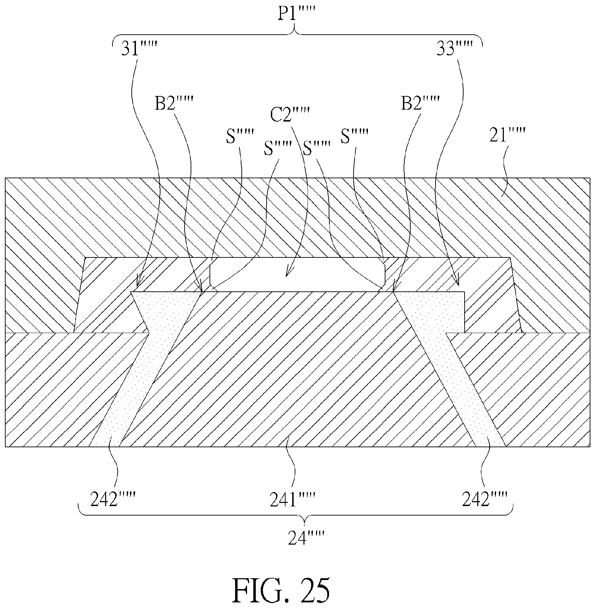

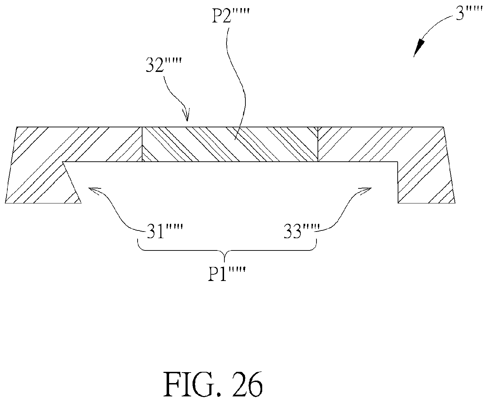

Please refer to FIG. 23 to FIG. 26. FIG. 23 is a flow chart diagram illustrating a method of molding a product 3''''' including an undercut part 31''''', a right-angle part 33''''' and a connecting part 32''''' with a molding device according to a sixth embodiment of the present disclosure. FIG. 24 is a diagram of a first mold assembly before a first injection according to the sixth embodiment of the present disclosure. FIG. 25 is a diagram of a second mold assembly before a second injection according to the sixth embodiment of the present disclosure. FIG. 26 is a diagram of the product 3''''' after the second injection according to the sixth embodiment of the present disclosure. As shown in FIG. 23 to FIG. 26, different from the aforementioned embodiments, the product 3''''' of this embodiment includes two turning parts at a left side and at a right side and the connecting part 32'''''. The two turning parts can be a left corner and a right corner of the product 3'''''. The turning part at the left side can include the undercut part 31''''' whose interior angle is less than 90 degrees, and the turning part at the right side can include the right-angle part 33''''' whose interior angle is equal to 90 degrees. The connecting part 32''''' is connected to the undercut part 31''''' and the right-angle part 33'''''. The method of molding the product 3''''' with the molding device of this embodiment can be similar to the one of the second embodiment. A first portion P1''''' of the product 3''''' including the undercut part 31''''' and the right-angle part 33''''' can be molded by performing a first injection into two first molding chambers C1''''' shown in FIG. 24. A second portion P2''''' of the product 3''''' including the connecting part 32''''' can be molded and integrally formed with the first portion P1''''' by performing the second injection into a second molding chamber C2''''' shown in FIG. 25, so as to mold the completed product 3'''''. Detailed description is omitted herein for simplicity. Besides, understandably, the undercut part 31''''' and the right-angle part 33''''' can be molded at different times or at one time.

In contrast to the prior art, the present disclosure utilizes the first injection to mold the first portion of the product including at least one turning part and further utilizes the second injection to mold the second portion of the product integrally formed with the first portion of the product. Furthermore, the first boundary between the first core and the first lifter of the first male mold is covered and located outside the first molding chamber during the first injection, and the second boundary between the second core and the second lifter of the second male mold is covered and located outside the second molding chamber during the second injection. Therefore, it effectively solves a problem of a protrusion structure caused by a gap between a lifter and a core in the prior art during a molding process, which improves aesthetic appearance of the product.

Those skilled in the art will readily observe that numerous modifications and alterations of the device and method may be made while retaining the teachings of the disclosure. Accordingly, the above disclosure should be construed as limited only by the metes and bounds of the appended claims.

## Claims

1. A method of molding a product (3, 3', 3", 3"', 3'''', 3''''') comprising at least one turning part comprising at least one of an undercut part (31, 31', 31", 31''''') and a right-angle part (33"', 33"", 33'''''), and **characterized in that** the method comprises:
providing a female mold (21, 21', 21", 21''', 21'''', 21'''''), a first male mold (22, 22', 22", 22''', 22"", 22''''') comprising a first core (221, 221', 221", 221''', 221'''', 221''''') and at least one first lifter (222, 222', 222", 222''', 222"", 222''''') obliquely and slidably disposed on the first core (221, 221', 221", 221''', 221'''', 221'''''), and a temporary mold (23, 23', 23", 23''', 23'''', 23''''') disposed between the female mold (21, 21', 21", 21''', 21'''', 21''''') and the first male mold (22, 22', 22", 22''', 22'''', 22'''''), wherein the temporary mold (23, 23', 23", 23''', 23'''', 23''''') covers at least one first boundary (B1, B1', B1", B1''', B1'''', B1''''') between the first core (221, 221', 221", 221''', 221'''', 221''''') and the at least one first lifter (222, 222', 222", 222''', 222"", 222''''') of the first male mold (22, 22', 22", 22''', 22'''', 22''''') in a contacting manner, at least one first molding chamber (C1, C1', C1", C1''', C1'''', C1''''') is defined by the female mold (21, 21', 21", 21''', 21'''', 21'''''), the first male mold (22, 22', 22", 22''', 22'''', 22''''') and the temporary mold (23, 23', 23", 23''', 23'''', 23'''''), and the at least one first boundary (B1, B1', B1", B1''', B1'''', B1''''') is located outside the at least one first molding chamber (C1, C1', C1", C1''', C1'''', C1''''');
performing a first injection into the at least one first molding chamber (C1, C1', C1", C1''', C1"", C1''''') to mold a first portion (P1, P1', P1", P1''', P1'''', P1''''') of the product (3, 3', 3", 3''', 3"", 3''''') comprising at least one of the at least one turning part;
removing the temporary mold (23, 23', 23", 23''', 23"", 23''''');
replacing the first male mold (22, 22', 22", 22''', 22'''', 22''''') with a second male mold (24, 24', 24", 24''', 24"", 24''''') comprising a second core (241, 241', 241", 241''', 241'''', 241''''') and at least one second lifter (242, 242', 242", 242''', 242"", 242''''') obliquely and slidably disposed on the second core (241, 241', 241", 241''', 241"", 241'''''), wherein the first portion (P1, P1', P1", P1''', P1'''', P1''''') of the product (3, 3', 3", 3''', 3'''', 3''''') covers at least one second boundary (B2, B2', B2", B2''', B2'''', B2''''') between the second core (241, 241', 241", 241''', 241'''', 241''''') and the at least one second lifter (242, 242', 242", 242''', 242"", 242''''') of the second male mold (24, 24', 24", 24''', 24'''', 24''''') in a contacting manner, a second molding chamber (C2, C2', C2", C2''', C2'''', C2''''') is defined by the female mold (21, 21', 21", 21''', 21'''', 21'''''), the second male mold (24, 24', 24", 24''', 24'''', 24''''') and the first portion (P1, P1', P1", P1''', P1'''', P1''''') of the product (3, 3', 3", 3''', 3'''', 3'''''), and the at least one second boundary (B2, B2', B2", B2''', B2'''', B2''''') is located outside the second molding chamber (C2, C2', C2", C2''', C2'''', C2'''''); and
performing a second injection into the second molding chamber (C2, C2', C2", C2''', C2'''', C2''''') to mold a second portion (P2, P2', P2", P2''', P2'''', P2''''') of the product (3, 3', 3", 3''', 3'''', 3''''') integrally formed with the first portion (P1, P1', P1", P1''', P1'''', P1''''') of the product (3, 3', 3", 3''', 3'''', 3'''''), so as to mold the completed product (3, 3', 3", 3''', 3'''', 3''''').

2. The method of claim 1, **characterized in that** the temporary mold (23, 23', 23", 23''', 23"", 23''''') is connected to the first male mold (22, 22', 22", 22''', 22'''', 22'''''), and removing the temporary mold (23, 23', 23", 23''', 23"", 23''''') comprises:
removing the temporary mold (23, 23', 23", 23''', 23'''', 23''''') by replacing the first male mold (22, 22', 22", 22''', 22'''', 22''''') with the second male mold (24, 24', 24", 24''', 24'''', 24''''').

3. The method of claim 1, **characterized in that** the temporary mold (23, 23', 23", 23''', 23"", 23''''') is connected to the female mold (21, 21', 21", 21''', 21"", 21'''''), and removing the temporary mold (23, 23', 23", 23''', 23'''', 23''''') comprises:
removing the temporary mold (23, 23', 23", 23''', 23'''', 23''''') by replacing the female mold (21, 21', 21", 21''', 21'''', 21''''') with another female mold.

4. The method of claim 1, **characterized in that** performing the first injection into the at least one first molding chamber (C1, C1', C1", C1''', C1'''', C1''''') to mold the first portion (P1, P1', P1", P1''', P1'''', P1''''') of the product (3, 3', 3", 3"', 3'''', 3''''') comprising the at least one of the at least one turning part comprises:
performing the first injection into the at least one first molding chamber (C1, C1', C1", C1''', C1'''', C1''''') with a transparent material to mold the first portion (P1, P1', P1", P1''', P1'''', P1''''') of the product (3, 3', 3", 3''', 3'''', 3''''') comprising the at least one of the at least one turning part.

5. The method of claim 1, **characterized in that** performing the second injection into the second molding chamber (C2, C2', C2", C2''', C2'''', C2''''') to mold the second portion (P2, P2', P2", P2''', P2'''', P2''''') of the product (3, 3', 3", 3''', 3"", 3''''') integrally formed with the first portion (P1, P1', P1", P1''', P1'''', P1''''') of the product (3, 3', 3", 3''', 3'''', 3'''''), so as to mold the completed product (3, 3', 3", 3''', 3"", 3''''') comprises:
performing the second injection into the second molding chamber (C2, C2', C2", C2''', C2'''', C2''''') with a transparent material to mold the second portion (P2, P2', P2", P2''', P2'''', P2''''') of the product (3, 3', 3", 3''', 3'''', 3''''') integrally formed with the first portion (P1, P1', P1", P1''', P1'''', P1''''') of the product (3, 3', 3", 3''', 3"", 3'''''), so as to mold the completed product (3, 3', 3", 3''', 3'''', 3''''').

6. The method of claim 1, **characterized in that** replacing the first male mold (22, 22', 22", 22''', 22"", 22''''') with the second male mold (24, 24', 24", 24''', 24"", 24''''') comprising the second core (241, 241', 241", 241'''', 241"", 241''''') and the at least one second lifter (242, 242', 242", 242''', 242"", 242''''') obliquely and slidably disposed on the second core (241, 241', 241", 241''', 241'''', 241''''') comprises:
providing the second male mold (24, 24', 24", 24''', 24'''', 24''''') rotated from the first male mold (22, 22', 22", 22''', 22'''', 22''''') by 180 degrees.

7. The method of claim 1, **characterized in that** the at least one turning part comprises a plurality of turning parts, and performing the first injection into the at least one first molding chamber (C1, C1', C1", C1''', C1'''', C1''''') to mold the first portion (P1, P1', P1", P1"', P1'''', P1''''') of the product (3, 3', 3", 3"', 3'''', 3''''') comprising the at least one of the at least one turning part comprises:
performing the first injection into the at least one first molding chamber (C1, C1', C1", C1''', C1'''', C1''''') to mold the first portion (P1, P1', P1", P1''', P1'''', P1''''') of the product (3, 3', 3", 3''', 3'''', 3''''') comprising the plurality of turning parts at different times or at one time.

8. A product (3, 3', 3", 3"', 3"", 3''''') comprising at least one turning part comprising at least one of an undercut part (31, 31', 31", 31''''') and a right-angle part (33"', 33'''', 33'''''), and **characterized in that** the product is manufactured by the method of any of claims 1 to 7.

9. A molding device manufacturing a product (3, 3', 3", 3"', 3'''', 3''''') comprising at least one turning part comprising at least one of an undercut part (31, 31', 31", 31''''') and a right-angle part (33''', 33'''', 33'''''), and **characterized in that** the molding device manufactures the product (3, 3', 3", 3''', 3'''', 3''''') by the method of any of claims 1 to 7.

## Patentansprüche

1. Verfahren zum Gießen eines Produktes (3, 3', 3", 3''', 3'''', 3'''''), welches mindestens ein Neigungsteil umfasst, das mindestens eines von einem Hinterschneidungsteil (31, 31', 31", 31''''') und einem rechtwinkligem Teil (33''', 33'''', 33''''') umfasst, und **dadurch gekennzeichnet, dass** das Verfahren umfasst:
Bereitstellen einer weiblichen Gussform (21, 21', 21", 21''', 21'''', 21'''''), einer ersten männlichen Gussform (22, 22', 22", 22''', 22"", 22'''''), die einen ersten Kern (221, 221', 221", 221''', 221'''', 221''''') und mindestens einen ersten Heber (222, 222', 222", 222''', 222'''', 222''''') umfasst, der schräg und gleitend auf dem ersten Kern (221, 221', 221", 221''', 221'''', 221''''') vorgesehen ist, und einer temporären Gussform (23, 23', 23", 23''', 23'''', 23'''''), die zwischen der weiblichen Gussform (21, 21', 21", 21''', 21'''', 21''''') und der ersten männlichen Gussform (22, 22', 22", 22''', 22'''', 22''''') vorgesehen ist, worin die temporäre Gussform (23, 23', 23", 23''', 23'''', 23''''') mindestens eine erste Begrenzung (B1, B1', B1", B1''', B1'''', B1''''') zwischen dem ersten Kern (221, 221', 221", 221''', 221'''', 221''''') und dem mindestens einen ersten Heber (222, 222', 222", 222''', 222'''', 222''''') der ersten männlichen Gussform (22, 22', 22", 22''', 22'''', 22''''') auf eine in Kontakt kommende Weise bedeckt, mindestens eine erste Gusskammer (C1, C1', C1", C1''', C1'''', C1''''') durch die weibliche Gussform (21, 21', 21", 21''', 21'''', 21'''''), die erste männliche Gussform (22, 22', 22", 22''', 22'''', 22''''') und die temporäre Gussform (23, 23', 23", 23''', 23'''', 23''''') definiert wird, und die mindestens eine erste Begrenzung (B1, B1', B1", B1''', B1'''', B1''''') außerhalb der mindestens einen ersten Gusskammer (Cl, C1', C1", C1''', C1'''', C1''''') vorgesehen ist;
Durchführen einer ersten Einspritzung in die mindestens eine erste Gusskammer (C1, C1', C1", C1''', C1'''', C1'''''), um einen ersten Bereich (P1, P1', P1", P1''', P1'''', P1''''') des Produktes (3, 3', 3", 3''', 3"", 3''''') zu gießen, der mindestens eines von dem mindestens einen Neigungsteil umfasst;
Entfernen der temporären Gussform (23, 23', 23", 23''', 23'''', 23''''');
Ersetzen der ersten männlichen Gussform (22, 22', 22", 22''', 22'''', 22''''') durch eine zweite männliche Gussform (24, 24', 24", 24''', 24'''', 24'''''), die einen zweiten Kern (241, 241', 241", 241''', 241'''', 241''''') und mindestens einen zweiten Heber (242, 242', 242", 242''', 242'''', 242''''') umfasst, der schräg und gleitend auf dem zweiten Kern (241, 241', 241", 241''', 241'''', 241''''') vorgesehen ist, wobei der erste Bereich (P1, P1', P1", P1''', P1'''', P1''''') des Produktes (3, 3', 3", 3''', 3 '''', 3''''') mindestens eine zweite Begrenzung (B2, B2', B2", B2''', B2'''', B2''''') zwischen dem zweiten Kern (241, 241', 241", 241''', 241'''', 241''''') und dem mindestens einen zweiten Heber (242, 242', 242", 242''', 242'''', 242''''') der zweiten männlichen Gussform (24, 24', 24", 24''', 24'''', 24''''') auf eine in Kontakt kommende Weise bedeckt, eine zweite Gusskammer (C2, C2', C2", C2''', C2'''', C2''''') durch die weibliche Gussform (21, 21', 21", 21''', 21'''', 21'''''), die zweite männliche Gussform (24, 24', 24", 24''', 24'''', 24''''') und den ersten Bereich (P1, P1', P1", P1''', P1'''', P1''''') des Produktes (3, 3', 3", 3''', 3"", 3''''') definiert wird, und die mindestens eine zweite Begrenzung (B2, B2', B2", B2''', B2'''', B2''''') außerhalb der zweiten Gusskammer (C2, C2', C2", C2''', C2'''', C2''''') vorgesehen ist; und
Durchführen einer zweiten Einspritzung in die zweite Gusskammer (C2, C2', C2", C2''', C2'''', C2'''''), um einen zweiten Bereich (P2, P2', P2", P2''', P2'''', P2''''') des Produktes (3, 3', 3", 3''', 3"", 3''''') zu gießen, der einstückig mit dem ersten Bereich (P1, P1', P1", P1''', P1'''', P1''''') des Produktes (3, 3', 3", 3''', 3"", 3''''') ausgebildet ist, um das vollständige Produkt (3, 3', 3", 3''', 3"", 3''''') zu gießen.

2. Verfahren nach Anspruch 1, **dadurch gekennzeichnet, dass** die temporäre Gussform (23, 23', 23", 23''', 23'''', 23''''') mit der ersten männlichen Gussform (22, 22', 22", 22''', 22"", 22''''') verbunden ist, und eine Entfernen der temporären Gussform (23, 23', 23", 23''', 23'''', 23''''') umfasst:
Entfernen der temporären Gussform (23, 23', 23", 23''', 23'''', 23''''') durch Ersetzen der ersten männlichen Gussform (22, 22', 22", 22''', 22'''', 22''''') durch die zweite männliche Gussform (24, 24', 24", 24''', 24'''', 24''''').

3. Verfahren nach Anspruch 1, **dadurch gekennzeichnet, dass** die temporäre Gussform (23, 23', 23", 23''', 23"", 23''''') mit der weiblichen Gussform (21, 21', 21", 21''', 21'''', 21''''') verbunden ist, und ein Entfernen der temporären Gussform (23, 23', 23", 23''', 23'''', 23''''') umfasst:
Entfernen der temporären Gussform (23, 23', 23", 23''', 23'''', 23''''') durch Ersetzen der weiblichen Gussform (21, 21', 21", 21''', 21'''', 21''''') durch eine andere weibliche Gussform.

4. Verfahren nach Anspruch 1, **dadurch gekennzeichnet, dass** das Durchführen der ersten Einspritzung in die mindestens eine erste Gusskammer (C1, C1', C1", C1''', C1'''', C1'''''), um den ersten Bereich (P1, P1', P1", P1''', P1'''', P1''''') des Produktes (3, 3', 3", 3''', 3"", 3'''''), zu gießen, das das mindestens eine des mindestens einen Neigungsteils aufweist, umfasst:
Durchführen der ersten Einspritzung in die mindestens eine erste Gusskammer (C1, C1', C1", C1''', C1'''', C1''''') mit einem transparenten Material, um den ersten Bereich (P1, P1', P1", P1''', P1'''', P1''''') des das mindestens eines von dem mindestens einen Neigungsteil umfassenden Produktes (3, 3', 3", 3''', 3"", 3''''') zu gießen.

5. Verfahren nach Anspruch 1, **dadurch gekennzeichnet, dass** das Durchführen der zweiten Einspritzung in die zweite Gusskammer (C2, C2', C2", C2''', C2'''', C2'''''), um den zweiten Bereich (P2, P2', P2", P2''', P2'''', P2''''') des Produktes (3, 3', 3", 3''', 3"", 3''''') mit dem ersten Bereich (P1, P1', P1", P1''', P1'''', P1''''') des Produktes (3, 3', 3", 3''', 3"", 3''''') einstückig ausgebildet zu gießen, um das vollständige Produkt (3, 3', 3", 3''', 3'''', 3''''') zu gießen, umfasst:
Durchführen der zweiten Einspritzung in die zweite Gusskammer (C2, C2', C2", C2''', C2'''', C2''''') mit einem transparenten Material, um den zweiten Bereich (P2, P2', P2", P2''', P2'''', P2''''') des Produktes (3, 3', 3", 3''', 3"", 3''''') mit dem ersten Bereich (P1, P1', P1", P1''', P1'''', P1''''') des Produktes (3, 3', 3", 3''', 3'''', 3''''') einstückig ausgebildet zu gießen, um das vollständige Produkt (3, 3', 3", 3''', 3"", 3''''') zu gießen.

6. Verfahren nach Anspruch 1, **dadurch gekennzeichnet, dass** das Ersetzen der ersten männlichen Gussform (22, 22', 22", 22''', 22'''', 22''''') durch die zweite männliche Gussform (24, 24', 24", 24''', 24'''', 24'''''), die den zweiten Kern (241, 241', 241", 241''', 241'''', 241''''') und den mindestens einen zweiten Heber (242, 242', 242", 242''', 242'''', 242''''') umfasst, der schräg und gleitend auf dem zweiten Kern (241, 241', 241", 241''', 241'''', 241''''') vorgesehen ist, umfasst:
Bereitstellen der zweiten männlichen Gussform (24, 24', 24", 24''', 24'''', 24'''''), die von der ersten männlichen Gussform (22, 22', 22", 22''', 22'''', 22''''') um 180 Grad gedreht ist.

7. Verfahren nach Anspruch 1, **dadurch gekennzeichnet, dass** das mindestens eine Neigungsteil mehrere Neigungsteile umfasst, und das Durchführen der ersten Einspritzung in die mindestens eine erste Gusskammer (C1, C1', C1", C1''', C1'''', C1'''''), um den ersten Bereich (P1, P1', P1", P1''', P1'''', P1''''') des Produktes (3, 3', 3", 3''', 3"", 3''''') zu gießen, das mindestens eines des mindestens einen Neigungsteil aufweist, umfasst:
Durchführen der ersten Einspritzung in die mindestens eine erste Gusskammer (C1, C1', C1", C1''', C1'''', C1'''''), um den ersten Bereich (P1, P1', P1", P1''', P1'''', P1''''') des die mehreren Neigungsteile umfassenden Produktes (3, 3', 3", 3''', 3"", 3''''') zu gießen, aufeinanderfolgend oder gleichzeitig.

8. Produkt (3, 3', 3", 3''', 3"", 3'''''), welches mindestens ein Neigungsteil umfasst, das mindestens eines von einem Hinterschneidungsteil (31, 31', 31", 31''''') und einem rechtwinkligen Teil (33''', 33'''', 33''''') umfasst, und **dadurch gekennzeichnet ist, dass** das Produkt durch das Verfahren nach einem der Ansprüche 1 bis 7 hergestellt wurde.

9. Gießeinrichtung zum Herstellen eines Produktes (3, 3', 3", 3''', 3'''', 3'''''), das mindestens ein Neigungsteil umfasst, das mindestens eines von einem Hinterschneidungsteil (31, 31', 31", 31''''') und einem rechtwinkligen Teil (33''', 33'''', 33''''') umfasst, und **dadurch gekennzeichnet ist, dass** die Gießeinrichtung das Produkt (3, 3', 3", 3''', 3"", 3''''') durch das Verfahren nach einem der Ansprüche 1 bis 7 herstellt.

## Revendications

1. Procédé de moulage d'un produit (3, 3', 3", 3''', 3"", 3''''') comprenant au moins une partie rotative comprenant au moins une partie en contre-dépouille (31, 31', 31", 31''''') et une partie à angle droit (33''', 33'''', 33''''') et **caractérisé en ce que** le procédé comprend :
la fourniture d'un moule femelle (21, 21', 21", 21''', 21'''', 21'''''), d'un premier moule mâle (22, 22', 22", 22''', 22"", 22''''') comprenant un premier noyau (221, 221', 221", 221''', 221'''', 221''''') et au moins un premier dispositif de levage (222, 222', 222", 222''', 222'''', 222''''') disposé de manière oblique et coulissante sur le premier noyau (221, 221', 221", 221''', 221"", 221''''') et d'un moule temporaire (23, 23', 23", 23''', 23"", 23''''') disposé entre le moule femelle (21, 21', 21", 21''', 21'''', 21''''') et le premier moule mâle (22, 22', 22", 22''', 22'''', 22'''''), le moule temporaire (23, 23', 23", 23''', 23"", 23''''') recouvrant au moins une première limite (B1, B1', B1", B1''', B1'''', B1''''') entre le premier noyau (221, 221', 221", 221''', 221'''', 221''''') et ledit au moins un premier dispositif de levage (222, 222', 222", 222''', 222"", 222''''') du premier moule mâle (22, 22', 22", 22''', 22"", 22''''') dans un mode en contact, au moins une première chambre de moulage (C1, C1', C1", C1''', C1'''', C1''''') étant définie par le moule femelle (21, 21', 21", 21''', 21"", 21'''''), par le premier moule mâle (22, 22', 22", 22''', 22"", 22''''') et par le moule temporaire (23, 23', 23", 23''', 23"", 23''''') et ladite au moins une première limite (B1, B1', B1", B1''', B1'''', B1''''') étant située à l'extérieur de ladite au moins une première chambre de moulage (C1, C1', C1", C1''', C1'''', C1''''') ;
la réalisation d'une première injection dans ladite au moins une première chambre de moulage (C1, C1', C1", C1''', C1'''', C1''''') pour mouler une première partie (P1, P1', P1", P1''', P1'''', P1''''') du produit (3, 3', 3", 3''', 3"", 3''''') comprenant au moins ladite au moins une partie rotative ;
le retrait du moule temporaire (23, 23', 23", 23''', 23'''', 23''''') ;
le remplacement du premier moule mâle (22, 22', 22", 22''', 22'''', 22''''') par un deuxième moule mâle (24, 24', 24", 24''', 24"", 24''''') comprenant un deuxième noyau (241, 241', 241", 241''', 241'''', 241''''') et au moins un deuxième dispositif de levage (242, 242', 242", 242''', 242"", 242''''') disposé de manière oblique et coulissante sur le deuxième noyau (241, 241', 241", 241''', 241'''', 241'''''), la première partie (P1, P1', P1", P1''', P1'''', P1''''') du produit (3, 3', 3", 3''', 3"", 3''''') recouvrant au moins une deuxième limite (B2, B2', B2", B2''', B2"", B2''''') entre le deuxième noyau (241, 241', 241", 241''', 241'''', 241''''') et ledit au moins un deuxième dispositif de levage (242, 242', 242", 242''', 242"", 242''''') du deuxième moule mâle (24, 24', 24", 24''', 24"", 24''''') dans un mode en contact, une deuxième chambre de moulage (C2, C2', C2", C2''', C2"", C2''''') étant définie par le moule femelle (21, 21', 21", 21''', 21"", 21'''''), par le deuxième moule mâle (24, 24', 24", 24''', 24"", 24''''') et par la première partie (P1, P1', P1", P1''', P1'''', P1''''') du produit (3, 3', 3", 3''', 3'''', 3''''') et ladite au moins une deuxième limite (B2, B2', B2", B2''', B2'''', B2''''') étant située à l'extérieur de la deuxième chambre de moulage (C2, C2', C2", C2''', C2'''', C2''''') ;
et
la réalisation d'une deuxième injection dans la deuxième chambre de moulage (C2, C2', C2", C2''', C2"", C2''''') pour mouler une deuxième partie (P2, P2', P2", P2''', P2'''', P2''''') du produit (3, 3', 3", 3''', 3'''', 3''''') formée d'un seul tenant avec la première partie (P1, P1', P1", P1''', P1'''', P1''''') du produit (3, 3', 3", 3''', 3"", 3'''''), de manière à mouler le produit fini (3, 3', 3", 3''', 3'''', 3''''').

2. Procédé selon la revendication 1, **caractérisé en ce que** le moule temporaire (23, 23', 23", 23''', 23"", 23''''') est relié au premier moule mâle (22, 22', 22", 22''', 22"", 22''''') et le retrait du moule temporaire (23, 23', 23", 23''', 23"", 23''''') comprend : le retrait du moule temporaire (23, 23', 23", 23''', 23'''', 23''''') par remplacement du premier moule mâle (22, 22', 22", 22''', 22'''', 22''''') par le deuxième moule mâle (24, 24', 24", 24''', 24'''', 24''''').

3. Procédé selon la revendication 1, **caractérisé en ce que** le moule temporaire (23, 23', 23", 23''', 23"", 23''''') est relié au moule femelle (21, 21', 21", 21''', 21'''', 21''''') et le retrait du moule temporaire (23, 23', 23", 23''', 23'''', 23''''') comprend :
le retrait du moule temporaire (23, 23', 23", 23''', 23'''', 23''''') par remplacement du moule femelle (21, 21', 21'', 21''', 21''''', 21''''') par un autre moule femelle.

4. Procédé selon la revendication 1, **caractérisé en ce que** la réalisation de la première injection dans ladite au moins une première chambre de moulage (C1, C1', C1'', C1''', C1'''', C1''''') pour mouler la première partie (P1, P1', P1'', P1''', P1'''', P1''''') du produit (3, 3', 3", 3''', 3'''', 3''''') comprenant au moins ladite au moins une partie rotative comprend :
la réalisation de la première injection dans ladite au moins une première chambre de moulage (C1, C1', C1'', C1''', C1'''', C1''''') avec un matériau transparent pour mouler la première partie (P1, P1', P1'', P1''', P1'''', P1''''') du produit (3, 3', 3", 3''', 3'''', 3''''') comprenant au moins ladite au moins une partie rotative.

5. Procédé selon la revendication 1, **caractérisé en ce que** la réalisation de la deuxième injection dans la deuxième chambre de moulage (C2, C2', C2", C2''', C2'''', C2''''') pour mouler la deuxième partie (P2, P2', P2", P2''', P2'''', P2''''') du produit (3, 3', 3", 3''', 3'''', 3''''') formée d'un seul tenant avec la première partie (P1, P1', P1'', P1''', P1'''', P1''''' du produit (3, 3', 3'', 3''', 3'''', 3'''''), de manière à mouler le produit fini (3, 3', 3'', 3''', 3'''', 3''''') comprend:
la réalisation de la deuxième injection dans la deuxième chambre de moulage (C2, C2', C2", C2''', C2'''', C2''''') avec un matériau transparent pour mouler la deuxième partie (P2, P2', P2", P2''', P2'''', P2''''') du produit (3, 3', 3'', 3''', 3'''', 3''''') formée d'un seul tenant avec la première partie (P1, P1', P1'', P1''', P1'''', P1''''') du produit (3, 3', 3", 3''', 3'''', 3'''''), de manière à mouler le produit fini (3, 3', 3'', 3''', 3'''', 3''''').

6. Procédé selon la revendication 1, **caractérisé en ce que** le remplacement du premier moule mâle (22, 22', 22", 22''', 22'''', 22''''') par le deuxième moule mâle (24, 24', 24", 24''', 24'''', 24''''') comprenant le deuxième noyau (241, 241', 241'', 241''', 241'''', 241''''') et ledit au moins un deuxième dispositif de levage (242, 242', 242", 242''', 242'''', 242''''') disposé de manière oblique et coulissante sur le deuxième noyau (241, 241', 241'', 241''', 241'''', 241''''') comprend :
la fourniture du deuxième moule mâle (24, 24', 24", 24''', 24'''', 24''''') tourné de 180 degrés par rapport au premier moule mâle (22, 22', 22", 22''', 22'''', 22''''').

7. Procédé selon la revendication 1, **caractérisé en ce que** ladite au moins une partie rotative comprend une pluralité de parties rotatives et la réalisation de la première injection dans ladite au moins une première chambre de moulage (C1, C1', C1'', C1''', C1'''', C1''''') pour mouler la première partie (P1, P1', P1'', P1''', P1'''', P1''''') du produit (3, 3', 3'', 3''', 3'''', 3''''') comprenant au moins ladite au moins une partie rotative comprend :
la réalisation de la première injection dans ladite au moins une première chambre de moulage (C1, C1', C1'', C1''', C1'''', C1''''') pour mouler la première partie (P1, P1', P1'', P1''', P1'''', P1''''') du produit (3, 3', 3", 3''', 3'''', 3''''') comprenant la pluralité de parties tournantes en plusieurs fois ou en une fois.

8. Produit (3, 3', 3", 3''', 3'''', 3''''') comprenant au moins une partie rotative comprenant au moins une partie en contre-dépouille (31, 31', 31'', 31''''') et une partie à angle droit (33''', 33'''', 33''''') et **caractérisé en ce que** le produit est fabriqué par le procédé selon l'une quelconque des revendications 1 à 7.

9. Dispositif de moulage fabriquant un produit (3, 3', 3'', 3''', 3'''', 3''''') comprenant au moins une partie rotative comprenant au moins une partie en contre-dépouille (31, 31', 31'', 31''''') et une partie à angle droit (33''', 33'''', 33''''') et **caractérisé en ce que** le dispositif de moulage fabrique le produit (3, 3', 3", 3''', 3'''', 3''''') par le procédé selon l'une quelconque des revendications 1 à 7.
